# EUROPÄISCHE PATENTSCHRIFT

(11) **EP 3 875 306 B1**
(45) Veröffentlichungstag und Bekanntmachung des Hinweises auf die Patenterteilung: **13.08.2025**
(21) Anmeldenummer: 20000094.1
(22) Anmeldetag: 02.03.2020
(51) Int. Cl.: B60L 53/10, B60L 53/18, B60L 53/31, B60L 53/30, H02G 3/04, H02G 11/00

(54) **LADESTATION ZUM LADEN VON ELEKTROFAHRZEUGEN**
CHARGING STATION FOR CHARGING ELECTRIC VEHICLES
STATION DE RECHARGE PERMETTANT DE CHARGER DES VÉHICULES ÉLECTRIQUES

(43) Veröffentlichungstag der Anmeldung: 08.09.2021
(73) Patentinhaber: eLoaded GmbH, 6020 Innsbruck (AT)
(72) Erfinder: STEINBACHER, Frank, 86356 Neusäß (DE)
(74) Vertreter: Kimpfbeck, Thomas

(56) Entgegenhaltungen:
- DE-A1- 102011 005 386
- DE-U1- 202015 102 593
- US-A- 5 306 999

## Beschreibung

### TECHNISCHES GEBIET

Die vorliegende Erfindung betrifft eine Ladestation für Elektrofahrzeuge.

### STAND DER TECHNIK

Zum Laden von Elektrofahrzeugen mit Strom werden im Allgemeinen Ladestationen eingesetzt.

In ihrer Bauweise ähneln Ladestationen häufig konventionellen Zapfsäulen für Kraftstoffe. Deshalb werden Ladestationen auch als Stromtankstelle oder Ladesäule bezeichnet. Solche Ladesäulen können im öffentlichen oder nichtöffentlichen Raum aufgestellt sein. Ein Ladekabel mit Stecker ist entweder an einer Steckdose der Ladestation anschließbar oder bereits an der Ladestation angeschlagen und dient zur elektrischen Verbindung der Ladestation mit einem Elektrofahrzeug. Manche Ladesäulen, wie etwa in der US20190047430 A1, umfassen einen Grundkörper und einem Ausleger, der starr angeordnet ist und das Ladekabel so trägt, dass es vom Boden ferngehalten wird.

Zum Verstauen eines Ladekabels sind verschiedenen Aufroll- und Umlenkmechanismen bekannt, etwa aus CN110682817A, CN209972210U, CN209921107U, DE202019102323U1, CN209955790U, DE102018211344A1 und DE202011100062U1. Ferner ist aus dem Gebrauchsmuster CN208544138U ein Ladekabelhalter mit einem Sockel, einer Feder und einen einseitig an der Feder befestigten Stützelement bekannt. Ein Ladekabel ist an dem Stützelement befestigt, um zu verhindern, dass das Ladekabel am Boden schleift und beschädigt wird. Das Stützelement kann für einen Ladevorgang mit dem Ladekabel ausschwenken und nach dem Ladevorgang das Ladekabel automatisch wieder in eine Ausgangsposition zurückschwenken.

Aus DE 202015102593 U1 ist eine Ladestation für Elektrofahrzeuge bekannt. Diese bekannte Ladestation umfasst eine Ladesäule und wenigstens eine Ladekupplung zum Bereitstellen einer Ladeverbindung mit einem Elektrofahrzeug. Die Ladekupplung ist über ein Ladekabel mit dem Ladesäule verbunden. Der Kabeleintritt des Ladekabels in die Ladekupplungist an der Oberseite der Ladekupplung vorgesehen, so dass die Ladekupplung an dem Ladekabel aufgehängt ist.

Aus US 5,306,999 ist eine Elektrofahrzeugladestation mit einer Basiseinheit bekannt, wobei die Basiseinheit an einem Gebäude oder einer Haltekonstruktion angeordnet ist. Elektrofahrzeugladestation umfasst ferner ein Elektrokabel und eine Stangenbaugruppe. Das Kabel wird von der federnd befestigten Stangenbaugruppe gehalten.

### AUFGABE

Somit besteht eine Aufgabe der Erfindung darin, eine Ladestation in kompakter, sicherer und geschützter Bauform bereitzustellen, die insbesondere ein nahes Heranfahren mit dem Elektrofahrzeug ermöglicht, ein Ladekabel sicher vom Boden fernhält und ein leichtes Handling des Ladekabels für einen Nutzer ermöglicht.

### OFFENBARUNG DER ERFINDUNG

Erfindungsgemäß wird eine Ladestation zum Laden von Elektrofahrzeugen gemäß Anspruch 1 bereitgestellt. Die erfindungsgemäße Ladestation umfasst im Wesentlichen ein elektrisches Ladekabel und ein Federelement. Das Federelement kann an einem Ende befestigt sein und das andere Ende kann elastisch beweglich sein. Das Federelement kann das elektrische Ladekabel zumindest abschnittsweise stützen.

Vorzugsweise umfasst die erfindungsgemäße Ladestation kein Ladesäulengehäuse. Vielmehr kann die erfindungsgemäße Ladestation durch die Auslegung mit elektrischen Ladekabel und stützender Feder in einer schlanken, raumsparenden Bauform vorliegen. Die schlanke Bauform ermöglicht einen geringen Abstand zwischen der Ladestation und einem zu ladenden Elektrofahrzeug. Dadurch kann eine Länge des elektrischen Ladekabels und damit elektrischer Widerstand und Wärmeverlust im elektrischen Ladekabel im Wesentlichen verringert werden. Die erfindungsgemäße Ladestation kann durch ihre kompakte Bauform den Bedarf an öffentlicher Fläche reduzieren. Ferner kann die erfindungsgemäße Ladestation flexibler an öffentlichen Flächen angeordnet werden.

Das Federelement kann ein Aufständern von zumindest einem Abschnitt des elektrischen Ladekabels bewirken. Dadurch kann eine hohe Gesamtandienlänge des elektrischen Ladekabels von, z.B. bis zu 3 m, erreicht werden. Durch das Aufständern kann verhindert werden, dass das elektrische Ladekabel eine Bodenfläche berührt oder in einem Verkehrsraum liegt. Und zwar selbst dann, wenn das elektrische Ladekabel nicht an einem Elektrofahrzeug eingesteckt ist oder nicht mittels eines etwaigen Ladekabelhalters zusätzlich gehalten oder aufgerollt wird.

Vorzugsweise stützt das Federelement das elektrische Ladekabel von einer Bodenfläche im Wesentlichen vertikal bzw. aufrecht ab. Alternativ kann das Federelement an einer vertikalen Wand befestigt sein und das elektrische Ladekabel aufrecht stützen. Ferner kann das Federelement an einer Decke befestigt sein und das elektrische Ladekabel vertikal nach unten stützen. Bei einem Laden mit Gleichstrom weist das elektrische Ladekabel im Allgemeinen ein hohes Gewicht auf. Eine Ummantelung des elektrischen Ladekabels kann das Gewicht weiter erhöhen. Das Federelement kann zumindest einen Teil dieses Gewichts abstützen; das elektrische Ladekabel kann leichter zum Laden zu einem Elektrofahrzeug gezogen werden. Dabei kann das Federelement bogenförmig in Richtung des Elektrofahrzeugs geneigt bzw. vorgespannt werden. Eine Rückstellkraft des Federelements kann nach einem Laden des Elektrofahrzeugs ein Zurückziehen des elektrischen Ladekabels in eine Ruhelage bewirken.

Oberirdisch angeordnete herkömmliche Ladesäulengehäuse, umfassen üblicherweise teure und empfindliche elektronische Bauelemente. Die erfindungsgemäße Ladestation kann ohne ein solches oberirdisches Ladesäulengehäuse auskommen, ist also im Allgemeinen geschützter gegen Vandalismus, wie Überfahren, Besprühen oder Abschneiden des Ladekabels und der Feder.

In einer weiteren Ausgestaltung kann das Federelement das elektrische Ladekabel teilweise umgeben. Dadurch kann eine noch kompaktere Bauform erreicht werden. Insbesondere wird etwas mehr als eine Gesamt-Ladekabellänge über der Bodenfläche von dem Federelement umgeben, sodass das elektrische Ladekabel die Bodenfläche nicht berührt oder in einem Verkehrsraum liegt. Und zwar selbst dann, wenn das elektrische Ladekabel nicht an einem Elektrofahrzeug eingesteckt ist oder nicht mittels eines etwaigen Ladekabelhalters zusätzlich gehalten oder aufgerollt wird. Insbesondere stützt das Federelement in einem entspannten Zustand das elektrische Ladekabel so, dass das elektrische Ladekabel die Bodenfläche nicht berührt.

Erfindungsgemäss soll das Federelement an seinem einen Ende an einer Technikeinheit angeordnet bzw. befestigt sein. Die Technikeinheit kann wenigstens eine der Komponenten Kühleinrichtung, Steuerung, Gleichstromwandler, Schütz und Relais umfassen. Die Technikeinheit ist insbesondere unter bzw. parallel zu einer Bodenfläche oder hinter bzw. parallel zu einer Wandfläche angeordnet. Insbesondere ist die Technikeinheit verdeckt angeordnet. Die Technikeinheit ersetzt vorzugsweise die herkömmliche Ladesäule. Durch die verdeckte Anordnung der Technikeinheit kann ein sichtbarer Teil der erfindungsgemäßen Ladestation kompakt und platzsparend ausgelegt werden. Die verdeckte Anordnung kann die teuren Komponenten vor Vandalismus schützen. Auch versehentliches Beschädigen der Komponenten wird durch die verdeckte Anordnung im Allgemeinen verhindert. Ein bisher erforderlicher Not-Aus-Schalter kann Aufgrund der geschützen Bauform der erfindunsgemgemäßen Ladestation entfallen. Die kompakte Bauform der erfindungsgemäßen Ladestation verhindert zudem das Abstellen von Unrat auf der Ladestation und verringert so Reinigungsaufwand. Ferner erlaubt die fehlende Ladesäule ein nahes Heranfahren mit dem Elektrofahrzeug an die erfindungsgemäße Ladestation und spart beispielsweise Parkfläche.

Gemäß einer vorteilhaften Ausführung umfasst die erfindungsgemäße Ladestation eine Gleichstrom-Ladestation, die insbesondere an eine Gleichstrom-Leitung angeschlossen ist. Eine zentrale Energiequelle, z.B. eine Photovoltaikanlage, Batterie und/oder Gleichrichterstation, kann einen Gleichstrom über die Gleichstrom-Leitung an ein oder mehrere Gleichstrom-Ladestationen bereitstellen. Während herkömmliche Ladesäulen häufig an Wechselstromquellen angeschlossen sind und deshalb große Komponenten zur Gleichrichtung und Kühlung erfordern, verwendet die Gleichstrom-Ladestation Gleichstrom der beispielsweise mit einem kompakten Gleichstromwandlerl in der Technikeinheit auf eine Arbeitsgleichspannung zum Laden des Elektrofahrzeugs gewandelt werden kann.

Ferner kann das elektrische Ladekabel einen Stecker und die Ladestation eine Steckerhalterung zum abnehmbaren Halten des Steckers umfassen. Der Stecker umfasst beispielsweise einen CCS-, Chademo und/oder Tesla Supercharger Stecker. Für ein ergonomisches Bereithalten des Steckers für einen vor der Ladestation stehenden Nutzers kann die Steckerhalterung in etwa zwischen einer durchschnittlichen Handhöhe und einer Ellenbogenhöhe des Nutzers angeordnet sein, also z.B. in ca. 664 bis ca. 1179 mm Abstand von der Bodenfläche. Die Steckerhalterung ist vorzugsweise an dem Federelement angeordnet.

Erfindungsgemäss soll die Ladestation eine Statusanzeige umfassen. Die Statusanzeige ist am anderen Ende des Federelements angeordnet. Ferner kann die Ladestation ein Drahtlos-Kommunikationsmittel umfassen. Das Drahtlos-Kommunikationsmittel kann am anderen Ende des Federelements angeordnet sein. Vorzugsweise sind Drahtlos-Kommunikationsmittel und Statusanzeige in einer Einheit bzw. einem Gehäuse integriert. Die Statusanzeige kann mit der Steuerung in der Technikeinheit verbunden sein. Die Statusanzeige zeigt insbesondere eine Verfügbarkeit, eine Störung, einen laufenden Ladevorgang und/oder einen abgeschlossenen Ladevorgang an. Die Statusanzeige kann ein oder mehrere visuelle und/oder akustische Anzeigemittel, wie Lampen, Displays und Lautsprecher umfassen. Das Drahtlos-Kommunikationsmittel kann mit der Steuerung in der Technikeinheit verbunden sein. Das Drahtlos-Kommunikationsmittel umfasst beispielsweise WLAN, NFC oder Bluetooth und kann drahtlos Informationen über den Status der Ladestation, Details eines Ladevorgangs und dergleichen mit einem anderen drahtlos kommunizierenden Endgerät austauschen, z.B. dem Smartphone des Nutzers. Durch eine konsequente Trennung von Ladesäulen-Komponenten, die oberirdisch erforderlich sind, wie etwa die Statusanzeige und/oder das Drahtlos-Kommunikationsmittel und solcher, die oberirdisch nicht erforderlich sind, wie die Komponenten der verdeckt angeordneten Technikeinheit, kann die erfindungsgemäße Ladestation in einer kompakten und geschützten Bauform ausgelegt sein.

In einer weiteren bevorzugten Ausführung umfasst das Federelement eine Schraubenfeder. Die Schraubenfeder ermöglich u.a. das elektrische Ladekabel teilweise zu umgeben. Dadurch kann das elektrische Ladekabel vor Beschädigung geschützt werden. Ferner kann die Schraubenfeder den umgebenden Ladekabel-Abschnitt vertikal aufständern.

Das Federelement kann in einer weiteren Ausgestaltung zwei unterschiedliche Steigungen aufweisen. Ferner kann das Federelement bzw. seine Steigungen, seine Länge und/oder seine Federhärte individuell auf ein Gewicht bzw. eine Länge des elektrische Ladekabels ausgelegt werden. Die unterschiedlichen Steigungen ermöglichen unterschiedliche elastische Vermformungen über die Länge des Federelements.

Das Federelement ist insbesondere von einer flexiblen Schutzhülse umgeben. Die flexible Schutzhülse kann das Federelement vor Umwelteinflüssen, Verschmutzung und Beschädigung schützen.

Vorteilhafte Weiterbildungen der Erfindung sind in den Unteransprüchen angegeben und in der Beschreibung beschrieben.

### KURZBESCHREIBUNG DER ZEICHNUNGEN

Ausführungsbeispiele der Erfindung werden anhand der Zeichnungen und der nachfolgenden Beschreibung näher erläutert. Es zeigen:
Figur 1 ein Ausführungsbeispiel einer Ladestation gemäß der Erfindung und
Figur 2 ein weiteres Ausführungsbeispiel einer Ladestation gemäß der Erfindung.

### AUSFÜHRUNGSFORMEN DER ERFINDUNG

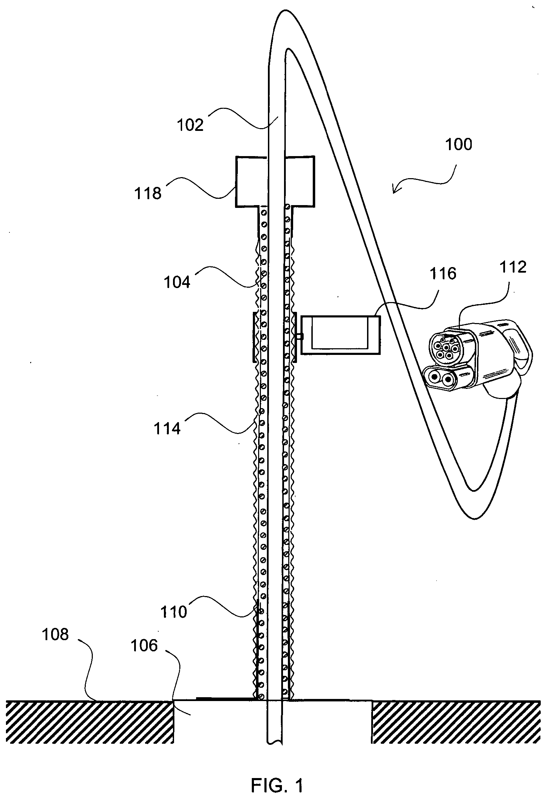

In der Figur 1 ist eine Ladestation 100 zum Laden eines Elektrofahrzeugs gezeigt. Die Ladestation 100 umfasst ein elektrisches Ladekabel 102, eine Schraubendruckfeder 104 und eine Technikeinheit 106. Die Technikeinheit 106 ist in eine Bodenfläche 108 eingelassen bzw. darunter angeordnet. Die Schraubendruckfeder 104 ist mittels eines Flansches 110 an einer Seitenfläche der Technikeinheit 106 befestigt, die zur Bodenfläche 108 parallel liegt bzw. eben an diese anschließt. Dadurch steht die Schraubendruckfeder 104 rechtwinklig bzw. vertikal von der Bodenfläche 108 vor. Der Flansch 110 ist mit mehreren Befestigungsschrauben an der Seitenfläche befestigt. Das elektrische Ladekabel 102 ist durch den Flansch 110 geführt und im Inneren der Technikeinheit 106 elektrisch angeschlossen. Die Schraubendruckfeder 104 ist ca. 1100 bis 1500 mm lang und hat einen Durchmesser von ca. 65 mm; im inneren Windungsdurchmesser der Schraubendruckfeder 104 ist das Ladekabel 102 angeordnet. Das Ladekabel 102 hat eine Länge von 2200 bis 3000 mm, ist also im Wesentlichen auf halber Länge in der Schraubendruckfeder 104 geführt. An einem anderen Ende der Schraubendruckfeder 104 ist das Ladekabel 102 frei herausgeführt. Die Schraubendruckfeder 104 ist hinsichtlich ihrer Dimensionierung, also insbesondere hinsichtlich Steigung, Länge und Federhärte, so auf das Ladekabel 102 ausgelegt, dass das Ladekabel 102 in einer Ruhelage der Schraubendruckfeder 104 vertikal aufgeständert ist und nicht auf der Bodenfläche 108 liegt.

Die Schraubendruckfeder 104 ist von einer flexiblen Schutzhülse 114 umgeben, die die Schraubendruckfeder 104 vor Umwelteinflüssen, Verschmutzung und Beschädigung schützen.

An einem freien Ende des Ladekabels 102 ist ein Gleichstromladestecker 112 angeordnet. In einer Ruhelage des Schraubendruckfeder 104 ist der Gleichstromladestecker 112 abnehmbar von einer Halterung 116 gehalten. Die Halterung 116 ist in einem Abstand von ca. 664 bis ca. 1179 mm von der Bodenfläche 108 an der Schutzhülse 114 oder der Schraubendruckfeder 104 befestigt.

Für einen Ladevorgang greift ein Nutzer den Gleichstromladestecker 112, entnimmt ihn der Halterung 116, zieht am Gleichstromladestecker 112 in Richtung des Elektrofahrzeugs, spannt sodann einen freien Abschnitt des Ladekabels 102, zieht weiter und verformt die Schraubendruckfeder 104 elastisch, wobei sich das andere Ende der Schraubendruckfeder 104 samt darin angeordnetem Ladekabel 102 weiter in Richtung des Elektrofahrzeugs neigt und überbrückt so einen Abstand zwischen der Ladestation 100 und dem Elektrofahrzeug..Nach dem Ladevorgang kann der Nutzer den Gleichstromladestecker 112 ohne große Mühe wieder in Richtung der Ladestation 100 führen, wobei die gespannte Schraubendruckfeder 104 das Ladekabel 102 stützt und mittels einer Rückstellkraft den Nutzer dabei unterstützt.

Die Ladestation 100 umfasst ferner eine zylinderförmige Statusleuchte 118 mit einem Durchmesser von 150 mm, die am anderen Ende der Schraubendruckfeder 104 angeordnet ist und die ein oder mehrere visuelle Anzeigemittel, wie rundumleuchtende Lampen und Displays umfasst, um eine Verfügbarkeit, eine Störung, einen laufenden Ladevorgang und/oder einen abgeschlossenen Ladevorgang anzuzeigen. Ferner umfasst die Ladestation 100 eine WLAN-Einheit, die in der Statusleuchte 118 integriert ist und die ausgelegt ist drahtlos Informationen über den Status der Ladestation 100, Details eines Ladevorgangs und dergleichen an ein Smartphone des Nutzers oder an das Elektrofahrzeug zu übertragen.

Durch die Aufständerung des Ladekabel 102 wird die Bedienung des Kabels erleichtert, da die Schraubendruckfeder 104 einen Teil des Kabelgewichts übernimmt. Ein leichteres Handling für das Führen des Ladekabels 102 wird so erzielt. Durch die kompakten Abmessungen der Schraubendruckfeder 104 und der Statusleuchte 118 nimmt die Ladestation 100 wenig Platz in einem öffentlichen Raum ein und das Ladekabel 102 kann näher an das Elektrofahrzeug geführt werden. Ferner ist durch die kompakten Abmessungen eine freie Positionierung des Ladekabels 102 im öffentlichen Raum möglich. Durch die Trennung der unterirdisch angeordneten Technikeinheit 106 und der oberirdischen Komponenten, wie Ladekabel 102 und Schraubendruckfeder 104, kann bei einem Überfahren oder Herausreißen der Feder keine stromführende Technik freigelegt werden. Die Betriebssicherheit wird dadurch erhöht; es ist kein Not-Aus-Schalter mehr erforderlich. Auch der Schutz vor Vandalismus ist bei der Ladestation 100 höher als bei herkömmlichen Ladesäulen, da im Wesentlichen nur das Ladekabel 102 und die Schraubendruckfeder 104 abgetrennt werden können, was Diebstähle auf Grund der geringen Kabellänge uninteressant macht. Ein Besprühen oder Bemalen ist auf Grund der geringen Oberfläche uninteressant. Auch Müll kann nicht ohne Weiteres auf der Ladestation 100 abgestellt werden. Der geringe Platzbedarf der Ladestation 100 ermöglicht ferner eine einfache Nachrüstung im öffentlichen Raum, in Parkhäusern und Tiefgaragen.

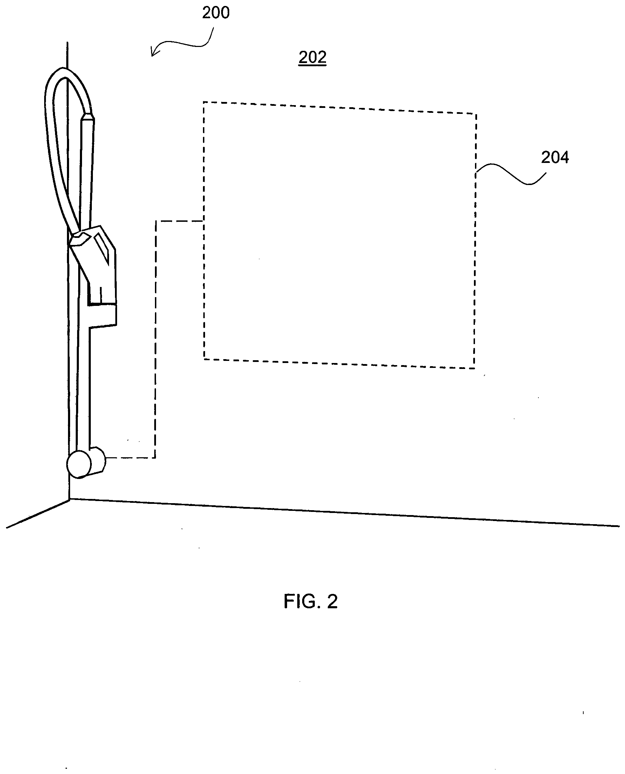

In der Figur 2 ist eine Ladestation 200 gezeigt, die an einer Parkhauswand 202 befestigt ist. Hinter der Parkhauswand 202, also verdeckt, ist eine Technikeinheit 204, ähnlich der Technikeinheit 106 in Fig. 1, angeordnet.

### BEZUGSZEICHENLISTE

- 100: Ladestation
- 102: Elektrisches Ladekabel
- 104: Schraubendruckfeder
- 106: Technikeinheit
- 108: Bodenfläche
- 110: Flansch
- 112: Gleichstromladestecker
- 114: Schutzhülse
- 116: Halterung
- 118: Statusleuchte
- 200: Ladestation
- 202: Parkhauswand
- 204: Technikeinheit

## Patentansprüche

1. Ladestation (100; 200) zum Laden von Elektrofahrzeugen, mit
einem elektrischen Ladekabel (102)**,** einer Technikeinheit (106; 204) und
einem Federelement (104), das an einem Ende befestigt ist und das an einem anderen Ende elastisch beweglich ist, wobei das Federelement (104) das elektrische Ladekabel (102) zumindest abschnittsweise stützt
**dadurch gekennzeichnet, dass**
das Federelement (104) an seinem einen Ende an der Technikeinheit (106; 204) angeordnet ist und wobei die Technikeinheit (106; 204) unter einer Bodenfläche (108) oder hinter einer Wandfläche (202) befestigt ist, und
dass die Ladestation (100; 200) eine Statusanzeige (118) umfasst, die am anderen Ende des Federelements (104) angeordnet ist.

2. Ladestation (100; 200) nach Anspruch 1
**dadurch gekennzeichnet, dass**
das Federelement (104) das elektrische Ladekabel (102) teilweise umgibt.

3. Ladestation (100; 200) nach Anspruch 1 oder 2
**dadurch gekennzeichnet, dass**
das Federelement (104) in einem entspannten Zustand das elektrische Ladekabel (102) so stützt, dass das elektrische Ladekabel (102) eine Bodenfläche (108) nicht berührt.

4. Ladestation (100; 200) nach Anspruch 3
**dadurch gekennzeichnet, dass**
die Technikeinheit (106; 204) wenigstens eine der Komponenten Kühleinrichtung, Steuerung, Gleichstromwandler, Schütz und Relais umfasst.

5. Ladestation (100; 200) nach einem der vorhergehenden Ansprüche
**dadurch gekennzeichnet, dass**
die Ladestation (100; 200) eine Gleichstrom-Ladestation (100; 200) umfasst, die insbesondere an eine Gleichstrom-Leitung angeschlossen ist.

6. Ladestation (100; 200) nach einem der vorhergehenden Ansprüche
**dadurch gekennzeichnet, dass**
das elektrische Ladekabel (102) einen Stecker (112) umfasst und
die Ladestation (100; 200) eine Steckerhalterung (116) zum abnehmbaren Halten des Steckers (112) umfasst.

7. Ladestation (100; 200) nach einem der vorhergehenden Ansprüche
**dadurch gekennzeichnet, dass**
die Ladestation (100; 200) ein Drahtlos-Kommunikationsmittel umfasst.

8. Ladestation (100; 200) nach Anspruch 7
**dadurch gekennzeichnet, dass**
das Drahtlos-Kommunikationsmittel am anderen Ende des Federelements (104) angeordnet ist.

9. Ladestation (100; 200) nach einem der vorhergehenden Ansprüche
**dadurch gekennzeichnet, dass**
das Federelement (104) eine Schraubenfeder (104) umfasst.

10. Ladestation (100; 200) nach einem der vorhergehenden Ansprüche
**dadurch gekennzeichnet, dass**
das Federelement (104) wenigstens zwei unterschiedliche Steigungen aufweist.

11. Ladestation (100; 200) nach einem der vorhergehenden Ansprüche
**dadurch gekennzeichnet, dass**
das Federelement (104) von einer flexiblen Schutzhülse (114) umgeben ist.

## Claims

1. Charging station (100; 200) for charging electric vehicles, comprising
an electric charging cable (102), a technical unit (106; 204) and a spring element (104) which is fastened at one end and which is elastically movable at another end, wherein the spring element (104) supports the electric charging cable (102) at least in part
**characterized in that**
the spring element (104) is arranged at one end on the technical unit (106; 204)
and wherein the technical unit (106; 204) is fastened under a floor surface (108) or behind a wall surface (202), and
**in that** the charging station (100; 200) comprises a status indicator (118) which is arranged at the other end of the spring element (104).

2. Charging station (100; 200) according to claim 1
**characterized in that**
the spring element (104) partially surrounds the electric charging cable (102).

3. Charging station (100; 200) according to claim 1 or 2
**characterized in that**
the spring element (104), in a relaxed state, supports the electric charging cable (102) so that the electric charging cable (102) does not touch a floor surface (108).

4. Charging station (100; 200) according to claim 3
**characterized in that**
the technical unit (106; 204) comprises at least one of the components of: cooling device, controller, DC to DC converter, contactor and relay.

5. Charging station (100; 200) according to any one of the preceding claims
**characterized in that**
the charging station (100; 200) comprises a DC charging station (100; 200) which is connected in particular to a DC line.

6. Charging station (100; 200) according to any one of the preceding claims
**characterized in that**
the electric charging cable (102) comprises a plug (112) and the charging station (100; 200) comprises a plug holder (116) for removably holding the plug (112).

7. Charging station (100; 200) according to any one of the preceding claims
**characterized in that**
the charging station (100; 200) comprises a wireless communication means.

8. Charging station (100; 200) according to claim 7, **characterized in that**
the wireless communication means is arranged at the other end of the spring element (104).

9. Charging station (100; 200) according to any one of the preceding claims
**characterized in that**
the spring element (104) comprises a coil spring (104).

10. Charging station (100; 200) according to any one of the preceding claims **characterized in that**
the spring element (104) has at least two different pitches.

11. Charging station (100; 200) according to any one of the preceding claims
**characterized in that**
the spring element (104) is surrounded by a flexible protective sleeve (114).

## Revendications

1. Station de charge (100 ; 200) pour la charge de véhicules électriques, comportant
un câble de charge électrique (102), une unité technique (106; 204) et un élément formant ressort (104) qui est fixé à une extrémité et qui est mobile de manière élastique à une autre extrémité, dans laquelle l'élément formant ressort (104) soutient le câble de charge électrique (102) au moins dans certaines sections
**caractérisée en ce que**
l'élément formant ressort (104) est disposé sur
l'unité technique (106 ; 204) au niveau de l'une de ses extrémités
et dans laquelle l'unité technique (106 ; 204) est fixée sous une surface de sol (108) ou derrière une surface de paroi (202), et
**en ce que** la station de charge (100 ; 200) comprend un moyen indicateur d'état (118) qui est disposé au niveau de l'autre extrémité de l'élément formant ressort (104).

2. Station de charge (100 ; 200) selon la revendication 1
**caractérisée en ce que**
l'élément formant ressort (104) entoure partiellement le câble de charge électrique (102).

3. Station de charge (100 ; 200) selon la revendication 1 ou 2
**caractérisée en ce que**
l'élément formant ressort (104) soutient le câble de charge électrique (102) dans un état détendu de sorte que le câble de charge électrique (102) ne touche pas une surface de sol (108).

4. Station de charge (100 ; 200) selon la revendication 3
**caractérisée en ce que**
l'unité technique (106 ; 204) comprend au moins l'un des composants parmi appareil de refroidissement,
commande, convertisseur de courant continu, contacteur et relais.

5. Station de charge (100 ; 200) selon l'une des revendications précédentes
**caractérisée en ce que**
la station de charge (100 ; 200) comprend une station de charge à courant continu (100 ; 200) qui
est en particulier raccordée à une ligne de courant continu.

6. Station de charge (100 ; 200) selon l'une des revendications précédentes
**caractérisée en ce que**
le câble de charge électrique (102) comprend une fiche (112) et la station de charge (100 ; 200) comprend un support pour fiche (116) permettant de supporter de manière amovible la fiche (112).

7. Station de charge (100 ; 200) selon l'une des revendications précédentes
**caractérisée en ce que**
la station de charge (100 ; 200) comprend un moyen de communication sans fil.

8. Station de charge (100 ; 200) selon la revendication 7
**caractérisée en ce que**
le moyen de communication sans fil est disposé au niveau de l'autre extrémité de l'élément formant ressort (104).

9. Station de charge (100 ; 200) selon l'une des revendications précédentes
**caractérisée en ce que**
l'élément formant ressort (104) comprend un ressort hélicoïdal (104).

10. Station de charge (100 ; 200) selon l'une des revendications précédentes
**caractérisée en ce que**
l'élément formant ressort (104) présente au moins deux inclinaisons différentes.

11. Station de charge (100 ; 200) selon l'une des revendications précédentes
**caractérisée en ce que**
l'élément formant ressort (104) est entouré par un manchon de protection flexible (114).
